# EUROPÄISCHE PATENTSCHRIFT

(11) **EP 1 208 638 B1**
(45) Veröffentlichungstag und Bekanntmachung des Hinweises auf die Patenterteilung: **29.07.2009**
(21) Anmeldenummer: 01945228.3
(22) Anmeldetag: 01.06.2001
(51) Int. Cl.: G01P 3/48, H02P 7/285

(54) **VERFAHREN ZUM BESTIMMEN DER DREHSTELLUNG DER ANTRIEBSWELLE EINES GLEICHSTROMMOTORS**
METHOD FOR DETECTING THE ROTATIONAL POSITION OF THE DRIVE SHAFT OF A DC MOTOR
PROCEDE POUR DETERMINER LA POSITION ANGULAIRE DE L'ARBRE D'ENTRAINEMENT D'UN MOTEUR A COURANT CONTINU

(30) Priorität: 06.06.2000 DE 10028039; 06.06.2000 DE 10028036
(43) Veröffentlichungstag der Anmeldung: 29.05.2002
(73) Patentinhaber: Leopold Kostal GmbH & Co. KG, 58507 Lüdenscheid (DE)
(72) Erfinder: LUTTER, Thomas, 59469 Hoeingen (DE); FRIEDRICH, Thomas, 44267 Dortmund (DE)
(86) Internationale Anmeldenummer: PCT/EP2001/006215
(87) Internationale Veröffentlichungsnummer: WO 2001/095471

(56) Entgegenhaltungen:
- DE-A- 4 135 873
- DE-A- 4 217 265
- DE-C- 19 729 238

## Beschreibung

Die Erfindung betrifft ein Verfahren zum Bestimmen der Position eines durch die Antriebswelle eines Gleichstrommotors angetriebenen Elements innerhalb einer vorbestimmten Bewegungsstrecke durch Auswerten der im Ankerstromsignal enthaltenen Stromrippel gemäß dem Oberbegriff des unabhängigen Patentanspruchs.

Das Ankerstromsignal eines Gleichstrommotors umfaßt einen sogenannten Gleichanteil sowie einen den Gleichanteil überlagernden Wechselanteil. Der Wechselanteil entsteht bei einem Betrieb des Gleichstrommotors infolge des Zusammenwirkens von Magnet (Feld), Ankerwicklung und Kommutator des Gleichstrommotors. Dies äußert sich in einer kurzzeitigen Änderung der induzierten Spannung, woraus sich die Welligkeit des Ankerstromsignals ergibt. Die in dem Ankerstromsignal enthaltenen Stromspitzen - im folgenden Stromrippel genannt - treten bei einer Umdrehung des Ankers in einer der Anzahl der Kollektorlamellen entsprechenden Häufigkeit auf. Weist beispielsweise der Anker 10 Kollektorlamellen auf, sind im Ankerstromsignal entsprechend 10 Stromrippel zu erkennen. Eine Zählung der Stromrippel kann somit Aufschluß über die aktuelle Drehstellung des Ankers des Gleichstrommotors und somit bezüglich des angetriebenen Elements innerhalb seiner vorbestimmten Bewegungsstrecke geben. Zu diesem Zweck wird das analoge Ankerstromsignal digitalisiert, um eine entsprechende Zählung vornehmen zu können.

Ein solches Verfahren ist beispielsweise aus der DE 195 11 307 C1 bekannt. Damit das Ankerstromsignal überlagernde Störimpulse nicht mit in die Auswertung einer Stromrippelzählung gelangen, wird üblicherweise das analoge Ankerstromsignal vor seiner Digitalisierung entsprechend aufbereitet, beispielsweise einer Frequenzfilterung unterzogen. Diese vorbekannte und auch weitere Maßnahmen dienen dazu, ein möglichst Störimpuls freies Stromrippelsignal der Digitalisierung und anschließenden Zählauswertung zuführen zu können. Als Störimpulse sind in diesem Zusammenhang nicht Kommutator bedingte Impulse angesprochen, die das Ankerstromsignal überlagern.

Bei einem Betrieb eines Gleichstrommotors, insbesondere unter Last kann es jedoch vorkommen, daß die im Ankerstromsignal enthaltenen Stromrippel verzerrt auftreten, wobei sich eine solche Verzerrung durch zwei Stromspitzen bemerkbar macht. Im Zuge der Digitalisierung eines solchen Ankerstromsignales werden anstatt einer Stromspitze durch eine solche Verzerrung an dieser Position zwei Stromrippel als Stromrippelsignal aufgezeichnet. Eine Zählung dieser Doppelrippel führt jedoch zu einer fehlerhaften Positionsbestimmung des angetriebenen Elements. Entsprechendes gilt für das Ausbleiben bzw. Nichtdetektieren eines Stromrippels. Diese Fehler sind Kommutator bedingt und somit nicht ohne weiteres durch eine Aufbereitung des analogen Ankerstromsignales eliminierbar.

Eingesetzt werden derartige Verfahren beispielsweise im Kraftfahrzeugbereich zum Steuern eines Verstellantriebes, wie sie beispielsweise für Fensterheber und/oder Schiebedächer vorgesehen sind. Ein wesentliches Element in der Erfassung der Position beispielsweise der Scheibe ist diejenige beim Schließen derselben, bei der der Einklemmschutz abgeschaltet werden kann. Eine solche Abschaltung ist notwendig, damit die Scheibe vollständig in ihren oberen Block und in die dort vorgesehenen Dichtungen einfahren kann, ohne daß infolge der erhöhten Last eine Motorabschaltung erfolgt. Bei einer fehlerhaften Zählung der Stromrippel zur Bestimmung der Position der Scheibe kann es vorkommen, daß der Einklemmschutz zu früh oder zu spät abgeschaltet wird.

Aus der DE 197 29 238 C1 ist ein Verfahren gemäß dem Oberbegriff des Patentanspruchs 1 bekannt, bei dem die Drehzahl oder der Drehwinkel eines mechanisch kommutierten Gleichstrommotors aus dem Zeitverlauf der bei der Kommutierung auftretenden Stromrippel des Motorstroms ermittelt werden. Aus einem Motorzustandsmodell werden bei diesem Verfahren Soll-Zeitbereiche für die folgenden Kommutierungsvorgänge abgeleitet. Ein Vergleich zwischen dem im Sinne eines Referenzstromrippels aufzufassenden Soll-Zeitbereich und dem tatsächlichen Kommutierungs-Zeitpunkt dient zur Korrektur etwa durch Störungen auftretender fehlerbehafteter Stromrippel.

Ausgehend von diesem diskutierten Stand der Technik liegt der Erfindung die Aufgabe zugrunde, ein eingangs genanntes, gattungsgemäßes Verfahren weiterzubilden, insbesondere dieses im Hinblick auf die Bereitstellung noch genauerer Referenzstromrippel zu verbessern.

Diese Aufgabe wird erfindungsgemäß dadurch gelöst, dass der zumindest eine Referenzstromrippel bei einem Betrieb des Gleichstrommotors zum Bewegen des angetriebenen Elements von einer ersten Position in eine zweite erfasst wird, wobei zur Erfassung des Referenzstromrippels der Gleichstrommotor zeitweise im wesentlichen ohne Last arbeitet.

Beim Gegenstand des beanspruchten Verfahrens ist vorgesehen, daß ein Vergleich zwischen einem korrekten, unverzerrten Stromrippel als Eich- bzw. Referenzgröße mit weiteren, gegebenenfalls verfälschten Stromrippeln erfolgt. Dieser Abgleich zwischen einem als korrekt definierten Stromrippel und den weiteren erfolgt durch einen Vergleich der jeweiligen Perioden miteinander.

Zum Bereitstellen eines Referenzstromrippels ist vorgesehen, daß der Gleichstrommotor im Zusammenhang mit einer gewünschten Bewegung des angetriebenen Elements von einer ersten Position in eine zweite zeitweise, kurzzeitig ohne Last arbeitet und das Ankerstromsignal dieses Betriebszustandes des Gleichstrommotors im Hinblick auf die darin enthaltenen Stromrippel ausgewertet wird. *Bei dieser Ausgestaltung der Erfindung wird davon ausgegangen, daß fehlerhafte Stromrippel - verzerrte oder auch fehlende - vermehrt bei einem Betrieb des Gleichstrommotors unter Last und nicht oder nur in einer vernachlässigbar kleinen Häufigkeit bei einem Betrieb des Gleichstrommotors ohne Last auftreten. Daher können die Perioden der Stromrippel bei einem Betriebszustand des Gleichstrommotors ohne Last als Referenzstromrippel herangezogen werden.

Der Gegenstand der Erfindung geht von der Prämisse aus, daß eine sprunghafte Änderung der Drehgeschwindigkeit des Gleichstrommotors, etwa eine Verdopplung oder eine Halbierung ausgedrückt in der entsprechend halbierten bzw. verdoppelten Periode verglichen mit der Periode des Referenzstromrippels aufgrund des Trägheitsmomentes der beweglichen Teile des Gleichstrommotors nicht möglich ist. Kommutator bedingte, fehlerhafte bzw. verzerrte Stromrippel zeigen anstelle eines erwarteten Maximums im analogen Ankerstromsignal zwei Maxima. Die Detektion etwa einer sprunghaften Halbierung der Periode bei einem Stromrippel gegenüber der Periode des Referenzstromrippels oder auch gegenüber der Periode eines vorangegangenen Stromrippels erlaubt daher die Schlußfolgerung, daß es sich bei dieser Periodenhalbierung nicht etwa um eine sprunghafte Verdopplung der Drehgeschwindigkeit des Gleichstrommotors sondern um einen verzerrten Stromrippel handelt. Entsprechend erfolgt eine Korrektur der Anzahl der als fehlerhaft erkannten Perioden der Stromrippel des Stromrippelsignals.

Eine Korrektur der Anzahl der als fehlerhaft erkannten Perioden der Stromrippel des Stromrippelsignals erfolgt bei Auftreten einer verzerrten Stromrippel etwa dadurch, dass in dem Stromrippelsignal zwei Stromrippel anstelle eines einzigen enthalten sind, ist die ermittelte Periode entsprechend halbiert gegenüber der Periode des Referenzstromrippels; entsprechend erfolgt eine Korrektur dahingehend, daß die Anzahl der ermittelten Stromrippel mit halbierter Periode durch den Faktor 2 geteilt wird.

Entsprechend umgekehrt wird verfahren, wenn durch eine scheinbare Verschmelzung von zwei Stromrippeln die im Stromrippelsignal wiedergegebene Periode beispielsweise verdoppelt ist. Zur Korrektur dieses Fehlers wird die Anzahl derartiger Perioden verdoppelt.

Daher kann mit dem erfindungsgemäßen Verfahren auch dann eine genaue Positionsbestimmung des von dem Gleichstrommotor angetriebenen Elements vorgenommen werden, auch wenn infolge bestimmter Lastzustände im Stromrippelsignal verfälschte Stromrippel enthalten sind.

Grundsätzlich kann eine Korrektur wie oben beschrieben zu einem beliebigen Zeitpunkt innerhalb derjenigen Zeitspanne erfolgen, in der der Gleichstrommotor zum Bewegen des angetriebenen Elements aus einer ersten Position in eine zweite Position bewegt wird. Im Rahmen des zuvor beschriebenen Ausführungsbeispieles, bei dem die Bereitstellung eines Referenzstromrippels durch eine Motorverstellung ohne Last vorgesehen ist, braucht lediglich sichergestellt zu werden, daß zur Ermittlung des Referenzstromrippels der Motor zeitweise bei einer solchen Verstellbewegung des angetriebenen Elements ohne bzw. im wesentlichen ohne Last arbeitet. Dies kann beispielsweise beim Motoranlauf oder auch beim Motorauslauf der Fall sein. Einen solchen Betriebszustand, bei dem der das angetriebene Element antreibende Gleichstrommotor ohne Last arbeitet, kann durch entsprechend konzipierte mechanische Kraftübertragungsmittel von dem Gleichstrommotor auf das angetriebene Element, etwa einen Seilzug realisiert sein. Diesbezüglich kann ein gewisses Spiel in der Kraftübertragung zwischen dem antreibenden Gleichstrommotor und dem angetriebenen Element ausreichend sein, um eine ausreichende Drehbewegung des Gleichstrommotors ohne Last zu haben, um zumindest einen Referenzstromrippel erfassen zu können.

Das erfindungsgemäße Verfahren eignet sich insbesondere zum Einsatz im Rahmen einer Positionserkennung einer Verstelleinrichtung zum Öffnen und Schließen einer Fensterscheibe, eines Schiebedaches oder zum Verstellen eines Sitzes in einem Kraftfahrzeug. Eine Positionsbestimmung, beispielsweise der Scheibe kann dann mit hinreichender Genauigkeit allein durch Auswerten des Stromrippelsignals ohne einen Einsatz zusätzlicher Sensoren durchgeführt werden. Bei einem solchen Einsatz ist es jedoch erforderlich, den Referenzstromrippel bereits beim Motoranlauf und somit vor einer Bewegung des Fensters zu ermitteln, damit gleichzeitig mit der Bewegung die gewünschte Korrektur durchgeführt werden kann, ohne daß das gesamte Stromrippelsignal zunächst gespeichert und nach Beendigung der durchgeführten Bewegung hinsichtlich einer Positionsbestimmung des angetriebenen Elements korrigiert werden muß. Nur auf diese Weise kann mit hinreichender Zuverlässigkeit diejenige Position der Scheibe erkannt werden, ob der in Abhängigkeit von weiteren Faktoren der Einklemmschutz ausgeschaltet werden kann, um die Scheibe in die Dichtungen des oberen Blockes einfahren zu können.

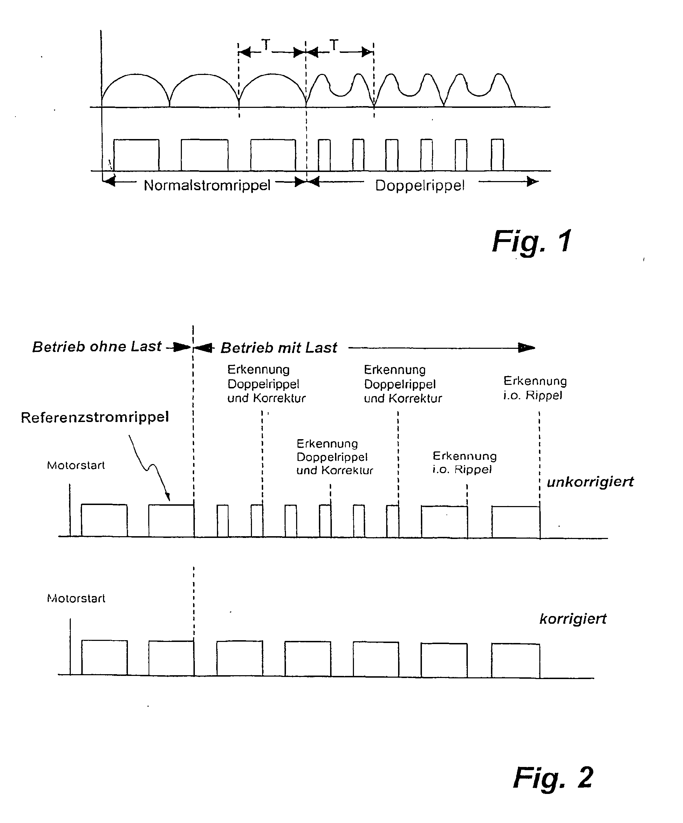

Schematisiert ist in Figur 1 ein Diagramm mit einem analogen Ankerstromsignal und darin enthaltenen Stromrippeln sowie das gemäß einem vorbekannten Verfahren daraus abgeleitete digitalisierte Stromrippelsignal wiedergegeben. In der Darstellung sind im ersten Teilabschnitt solche Stromrippel dargestellt, die unverfälscht sind und als Referenzstromrippel dienen könnten. Im daran anschließenden, rechten Teilabschnitt sind in der analogen Ankerstromkurve solche Stromrippel gezeigt, die verzerrt sind und somit in dem digitalisierten Stromrippelsignal als sogenannte Doppelrippel wiedergegeben sind.

Figur 2 zeigt schematisiert den Verlauf der digitalisierten Stromrippelkurve vor einer Korrektur und nach Durchführen der erfindungsgemäßen Korrektur. Die untere, als korrigiert bezeichnete Kurve, stellt eine Rekonstruktion des korrigierten Stromrippelsignals dar. Tatsächlich erfolgt bei der Korrektur lediglich eine Impulszählung, so daß die als korrigiert bezeichnete Kurve die Resultierende des Korrekturverfahrens ist. Es wird deutlich, daß ohne eine Korrektur durch Zählen der Stromrippel auf eine Positionsänderung des von dem Gleichstrommotor angetriebenen Elements entsprechend dem Drehwinkelbetrag von 10 Kollektorlamellen bewegt worden ist. Tatsächlich ist das angetriebene Element jedoch lediglich einem Drehwinkelbetrag entsprechend 7 Kollektodamellen bewegt worden.

Eine Plausibilitätsüberprüfung hinsichtlich der vorzunehmenden Korrektur kann durch einen Vergleich mit der Periode eines oder mehrerer, auf den als fehlerhaft erkannten Stromrippel folgenden Stromrippel erfolgen. Bei dieser Plausibilitätsüberprüfung wird die Erkenntnis ausgenutzt, daß verzerrte oder fehlende Stromrippel in der Ankerstromkurve in aller Regel einfach und somit bezüglich lediglich einer Kollektorlamelle auftreten und sich nicht über mehrere nachfolgende Kollektorlamellen fortsetzen. Beim Gegenstand des beanspruchten Verfahrens ist jedoch grundsätzlich auch möglich, eine solche Plausibilitätskontrolle über eine bestimmte Periodenanzahl hinweg vorzunehmen.

## Patentansprüche

1. Verfahren zum Bestimmen der Position eines durch die Antriebswelle eines Gleichstrommotors angetriebenen Elements innerhalb einer vorbestimmten Bewegungsstrecke durch Auswerten der im Ankerstromsignal enthaltenen Stromrippel, wobei eine aus zumindest einem Referenzstromrippel ermittelte Periode mit der Periode von jedem bei einem Betrieb des Gleichstrommotors erfassten Stromrippel verglichen wird und für den Fall, dass eine hinreichende Übereinstimmung zwischen der Periode des Referenzstromrippels und derjenigen einer Stromrippel des in Betrieb befindlichen Gleichstrommotors nicht feststellbar ist, eine Korrektur der nicht hinreichend übereinstimmenden Perioden des Stromrippelsignals des in Betrieb befindlichen Gleichstrommotors in Bezug auf diejenige des Referenzstromrippels erfolgt, **dadurch gekennzeichnet, dass** der zumindest eine Referenzstromrippel bei einem Betrieb des Gleichstrommotors zum Bewegen des angetriebenen Elements von einer ersten Position in eine zweite erfasst wird, wobei zur Erfassung des Referenzstromrippels der Gleichstrommotor zeitweise im wesentlichen ohne Last arbeitet.

2. Verfahren nach Anspruch 1, **dadurch gekennzeichnet, dass** der Gleichstrommotor bei seinem Anlauf bzw. kurz nach seinem Anlauf kurzzeitig ohne Last arbeitet.

3. Verfahren nach Anspruch 1 oder 2, **dadurch gekennzeichnet, dass** eine Plausibilitätsüberprüfung der Korrektur der Periode als fehlerhaft erkannter Stromrippel durch die Periode des oder der auf die als fehlerhaft erkannten Stromrippel folgenden Stromrippel erfolgt.

4. Verwendung des Verfahrens nach einem der Ansprüche 1 bis 3 zur Positionsbestimmung eines angetriebenen Elements in einem Kraftfahrzeug, etwa zur Positionsbestimmung einer Fensterscheibe, eines Schiebedaches oder eines Sitzes.

## Claims

1. Process for determining the position within a predefined movement range of an element driven by the drive shaft of a DC motor by means of evaluating the current ripple contained in the armature current signal, in the course of which a period defined on the basis of at least one reference current ripple is compared with the period of each current ripple detected while operating the DC motor and, in the event that it is not possible to determine adequate conformance between the period of the reference current ripple and that of a current ripple of the DC motor when it is in operation, a correction of the inadequately conforming periods of the current ripple signal of the operational DC motor is made in relation to that of the reference current ripple, **characterised in that** the at least one reference current ripple is recorded whenever the DC motor to move the driven element from an initial position to a second position is operated, with the DC motor from time to time functioning primarily with no load in order to record the reference current ripple.

2. Process in accordance with Claim 1, **characterised in that** the DC motor operates momentarily with no load when starting and/or shortly after starting.

3. Process in accordance with Claim 1 or Claim 2, **characterised in that** a plausibility check of the correction of the period takes place as a current ripple identified as defective through the period of the current ripple or ripples subsequent to the current ripple that has been identified as defective.

4. Application of the process in accordance with any of Claims 1 to 3 for determining the position of a powered element in a motor vehicle, for instance for determining the position of a window pane, a sliding roof or a seat.

## Revendications

1. Procédé pour la détermination de la position d'un éléments entraîné par l'arbre de commande d'un moteur à courant continu, dans le cadre d'un déplacement sur un parcours prédéterminé, par l'évaluation des ondulations de courant, qui sont contenues dans le signal de courant d'induit, une période, déterminée sur la base d'au moins une ondulation de courant de référence, étant comparée avec la période de chaque ondulation de courant saisie lors d'un fonctionnement du moteur à courant continu, et, dans le cas où une concordance suffisante entre la période de l'ondulation de référence et celle d'une ondulation de courant du moteur à courant continu en fonctionnement n'est pas constatée, une correction des périodes du signal des ondulations de courant du moteur à courant continu en fonctionnement, qui ne concordent pas suffisamment avec celles des ondulations de courant de référence, étant effectuée,
**caractérisé en ce que** l'ondulation de référence au moins prévue est saisie lors d'un fonctionnement du moteur à courant continu pour le déplacement de l'élément entraîné d'une première position à une deuxième, le moteur à courant continu fonctionnant temporairement essentiellement sans charge, pour la saisie de l'ondulation de courant de référence.

2. Procédé selon la revendication 1, **caractérisé en ce que** le moteur à courant continu, lors de son démarrage, respectivement peu de temps après son démarrage, fonctionne brièvement sans charge.

3. Procédé selon revendication 1 ou 2, **caractérisé en ce qu'**est effectué un contrôle de plausibilité de la correction de la période, en tant qu'ondulation de courant reconnue incorrecte, par la période de la ou des ondulations de courant succédant à l'ondulation de courant reconnue comme étant incorrecte.

4. Utilisation du procédé selon l'une des revendications 1 à 3 pour la détermination de la position d'un élément entraîné dans un véhicule automobile, par exemple pour la détermination de la position d'une glace, d'un toit ouvrant ou d'un siège.
